# FASCICULE DE BREVET EUROPEEN

(11) **EP 1 648 143 B1**
(45) Date de publication et mention de la délivrance du brevet: **05.12.2007**
(21) Numéro de dépôt: 04360090.7
(22) Date de dépôt: 13.10.2004
(51) Int. Cl.: H04L 29/08

(54) **Procédé de mise en relation sans fil, sélective et spontanée d'au moins deux entités et équipement mettant en oeuvre ce procédé**
Verfahren und Vorrichtung zur drahtlosen, selektiven und spontanen Verbindung von mindestens zwei Geräten
Process and apparatus for the wireless, selective and spontaneous connection of at least two devices

(43) Date de publication de la demande: 19.04.2006
(73) Titulaire: SWI S.A., 68200 Mulhouse (FR)
(72) Inventeur: Tobiet, Henri, 68170 Rixheim (FR); Moroni, Sergio, 68720 Spechbach le Bas (FR)
(74) Mandataire: Nithardt, Roland

(56) Documents cités:
- EP-A- 1 059 742
- WO-A-03/058908
- DE-A1- 3 922 677
- GB-A- 2 389 742

## Description

La présente invention concerne un procédé de mise en relation sans fil, sélective et spontanée d'au moins deux entités indépendantes comportant chacune au moins un module de communication par ondes de radiofréquence agencé pour émettre et/ou réceptionner des informations dans une zone d'émission prédéterminée et programmable. L'invention concerne également un équipement mettant en oeuvre ce procédé et comportant au moins les deux entités.

Par "entités", on entend les différents appareils informatiques disponibles sur le marché tels que les assistants personnels (PDA), les tablettes PC, les téléphones portables, les bornes informatiques fixes indépendantes ou reliées à un réseau tel qu'Internet (Hot Spot), les ordinateurs fixes ou portables, etc.

Par "sans fil", on entend les différents systèmes de communication sans fil utilisant les ondes de radiofréquence, disponibles sur le marché tels que les réseaux de type GSM (Global Service for Mobile) ou GPRS (General Packet Radio System), Bluetooth, Wi-Fi (Wireless Fidelity), Infra-Rouge, étiquettes électroniques programmables ou RFID (Radio Frequency Identification), etc., chacun ayant un protocole de communication et une zone d'émission propres.

Par "information", on entend tout type d'informations sous la forme visuelle (texte et/ou image), audio et/ou multimédia, transmises unilatéralement d'une entité vers une autre comme par exemple une publicité, un message d'alerte, un résultat de mesures, une information culturelle, une information de localisation géographique transmise par GPS, etc. ou échangées entre les entités comme par exemple un dialogue, un paiement, des messages écrits, etc. La nature de ces informations est bien entendu dépendante du domaine d'application dans lequel le procédé de l'invention est utilisé. Pour des applications sensibles comme par exemple des paiements, des échanges d'informations confidentielles, la protection des personnes, la surveillance de site, les informations peuvent être cryptées pour des questions de sécurité.

Il existe déjà des procédés de mise en relation sans fil d'au moins deux entités, mais tous ont des limites et des inconvénients.

Les réseaux sans fil existants (GSM/GPRS, Bluetooth, Wi-Fi) autorisent une mise en relation sur la base d'une clé informatique interne permettant d'identifier les entités, telle qu'un code, un numéro ou un identifiant. Des applications informatiques permettent la création de sous-clés multiples. Ce type de solution ne gère que le critère d'identification des entités. C'est le cas notamment du procédé de mise en relation décrit dans la publication WO 99/60499, qui gère uniquement une combinaison de sous-clés informatiques. Cette clé ou combinaison de sous-clés est en général configurable mais non dynamique. Dans ce cas, la gestion de sous-clés multiples est possible, mais au niveau applicatif seulement, c'est-à-dire une fois la mise en relation effectuée. La publication GB 2 389 742 décrit un autre exemple destiné à favoriser la rencontre des personnes ayant les mêmes centres d'intérêt. Dans ce cas, chaque personne mémorise son profil et ses centres d'intérêt dans un dispositif électronique agencé pour communiquer sans fil avec un autre dispositif compatible reconnaissable par un numéro d'identification. Ces dispositifs sont conçus pour scruter leur zone d'émission pendant un laps temps déterminé de manière à reconnaître les dispositifs compatibles puis pour communiquer avec eux afin de comparer leurs centres d'intérêt et enfin pour émettre une alarme afin d'avertir les utilisateurs concernés. Cette solution nécessite la connaissance préalable des dispositifs, est limitée à un seul critère d'empathie d'ordre qualitatif, impose une mise en relation préalable, est limitée à une communication entre deux dispositifs et ne permet pas l'échange de données multimédia.

Certains systèmes existants sont capables de gérer la localisation géographique au niveau applicatif, c'est-à-dire une fois la mise en relation effectuée. Cette solution implique une intrusion préalable des entités dans le réseau de communication visité. Ces systèmes nécessitent par conséquent soit un réseau additionnel comme le GPS (localisation géographique par satellite), soit des équipements additionnels comme les puces électroniques ou RFID, soit des modules additionnels combinant les réseaux GSM ou GPRS avec le Wi-Fi.

D'autres systèmes existants sont capables d'éliminer les intrus, à savoir les entités connectées au réseau de communication mais non conformes aux critères de comparaison, par un dialogue au niveau applicatif. Cette solution nécessite donc une intrusion préalable des entités dans le réseau de communication visité.

Certaines applications utilisent la téléphonie mobile par exemple pour la gestion de processus de maintenance et/ou de surveillance industrielles. Cette solution nécessite un contrat avec un opérateur de téléphonie, génère un coût à chaque mise en relation, ne permet d'échanger que des informations sous forme audio et/ou de messages écrits et les entités ne disposent que d'une capacité mémoire très limitée. La téléphonie mobile ne permet donc pas d'échanger, gratuitement et de manière indépendante, des informations multimédia, ni de collecter et stocker des informations en vue de leur interprétation. De plus, elle n'est pas interactive en temps réel.

D'autres procédés utilisent des audio guides par exemple pour des applications culturelles de visite d'un lieu touristique, d'un musée, etc. Ils sont généralement limités à la diffusion d'informations sous forme audio et ne permettent pas de mémoriser les informations collectées lors de la visite. Certains audio guides sont interactifs, ce qui signifie que l'information diffusée dépend de la position géographique du visiteur dans le lieu ou le musée. D'autres procédés utilisent des bornes multimédia fixes situées à proximité des zones d'intérêt et interrogeables à distance par les visiteurs. Ces bornes ne sont pas conçues pour être partagées entre plusieurs visiteurs et l'information délivrée n'est pas personnalisable. Certains lieux touristiques ou musées équipés d'un accès Internet ont mis en service des bornes de communication sans fil appelées "hot spots" permettant aux visiteurs d'accéder au site Internet du lieu ou du musée par leurs assistants personnels appelés "PDA" ou leurs téléphones portables. Cette technique utilise un site statique et ne permet pas une interactivité en fonction par exemple de la localisation géographique du visiteur sur le lieu touristique ou dans le musée, ni une personnalisation des informations diffusées. Ce procédé nécessite également un abonnement auprès d'un fournisseur d'accès au réseau Internet.

Certains procédés utilisent des badges ou des cartes magnétiques par exemple pour accéder aux transports publics, aux parkings ou à d'autres lieux gardés. Ces techniques ne permettent qu'un échange de codes d'accès.

La présente invention vise à pallier ces inconvénients en proposant un procédé de mise en relation sans fil d'au moins deux entités indépendantes et autonomes, gratuitement, de manière spontanée, sécurisée, fugitive et sans infrastructure. Ce procédé permet de filtrer les entités à la source et de ne les mettre en relation que si leurs critères d'empathie concordent, ce qui garantit une fonction dite anti-SPAM, évitant l'accès aux publicités sauvages ou aux entités non reconnues et assurant ainsi une performance et une sécurité optimales du système de communication. Il permet également l'échange d'informations aussi bien sous forme visuelle, audio que multimédia, et autorise une mémorisation de ces informations en vue d'un traitement ultérieur par exemple.

L'empathie est définie comme le mode de connaissance intuitive d'autrui, qui repose sur la capacité de se mettre à la place de l'autre. L'invention repose essentiellement sur la reconnaissance des entités à mettre en relation, ces entités étant reconnaissables par un ou plusieurs critères appelés dans la suite du texte des critères d'empathie.

Dans ce but, l'invention concerne un procédé selon la revendication indépendante 1, du genre indiqué en préambule, tel que l'on équipe chaque entité d'au moins un logiciel déterminant une application donnée et d'au moins un module de mise en relation, que l'on définit des critères d'empathie pour chacune des entités et en fonction de ladite application donnée, et qu'il comporte au moins les étapes suivantes :
◆ une étape d'exploration au cours de laquelle le module de mise en relation de chaque entité explore une zone géographique correspondant sensiblement à sa zone d'émission prédéterminée pour rechercher les autres entités présentes dans cette zone géographique, et
◆ une étape de sélection au cours de laquelle le module de mise en relation de chaque entité compare les critères d'empathie des entités présentes et ne sélectionne que les entités dites élues dont les critères d'empathie concordent avec les siens; caractérisé en ce que le procédé comporte aussi
◆ une étape de mise en relation au cours de laquelle le module de mise en relation crée un réseau de communication privilégié, sans fil, spontané, sélectif et fugitif entre lesdites entités dites élues pour leur permettre d'échanger lesdites informations en fonction de ladite application donnée, tant que leurs critères d'empathie concordent.

Dans ce but, l'invention concerne également un équipement selon la revendication indépendante 17, du genre indiqué en préambule, tel que les entités comportent chacune au moins un logiciel déterminant une application donnée et au moins un module de mise en relation basée sur une reconnaissance préalable de critères d'empathie prédéterminés pour ladite application donnée, ces critères d'empathie étant prédéterminés pour ladite application donnée pour chacune des entités, et le module de mise en relation de chacune des entités étant agencé pour :
◆ explorer la zone géographique correspondant sensiblement à sa zone d'émission prédéterminée pour rechercher les autres entités présentes dans cette zone géographique, et
◆ sélectionner parmi les entités présentes les entités dites élues dont les critères d'empathie prédéterminés concordent avec les siens; caractérisé en ce que ledit module de mise en relation de chacune des entités est aussi agencé pour:

◆ créer un réseau de communication spécifique, sans fil, spontané, sélectif et fugitif entre les entités dites élues tant que leurs critères d'empathie concordent, et
◆ émettre et/ou diffuser entre les entités dites élues lesdites informations en fonction de ladite application donnée.

La présente invention et ses avantages apparaîtront mieux dans la description suivante d'un mode de réalisation donné à titre d'exemple non limitatif, en référence aux dessins annexés, dans lesquels :
- la figure 1 représente schématiquement le procédé de mise en relation entre deux entités selon l'invention,
- la figure 2 représente schématiquement le fonctionnement du module de mise en relation intégré dans les entités de l'équipement selon l'invention,
- la figure 3 est un schéma plus détaillé du fonctionnement du module de la figure 2, et
- la figure 4 représente schématiquement différents types d'entités entrant dans la composition de l'équipement de l'invention.

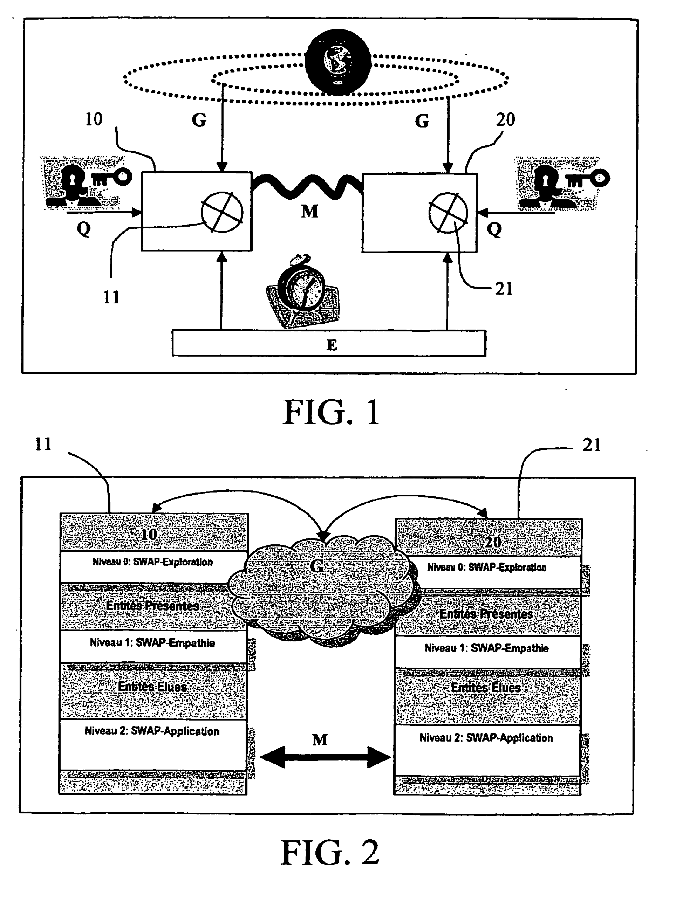

La figure 1 illustre le procédé de mise en relation selon l'invention d'au moins deux entités 10, 20, basé sur le fait que cette mise en relation M, symbolisée par une sinusoïde, est conditionnée par la reconnaissance préalable d'au moins un critère d'empathie G, Q, E concordant entre ces deux entités 10, 20. Ce procédé permet donc de créer un réseau de communication sans fil spontané, sélectif, sécurisé et fugitif, appelé par la suite "réseau SWAP", entre lesdites entités 10, 20 si et uniquement si et tant que leurs critères d'empathie G, Q, E concordent.

Dans l'exemple représenté à la figure 1, les deux entités 10, 20 sont schématisées par des rectangles et comportent chacune un logiciel d'application (non représenté) et un module de mise en relation 11, 21, appelé par la suite "module SWAP" (SWI Application Protocol), symbolisé par un cercle barré d'une croix. Les entités 10, 20 sont indépendantes et peuvent être fixes ou mobiles (nomades), autonomes ou non.

Ce module SWAP 11, 21 comprend un protocole de communication dénommé SWAP agencé pour n'autoriser la création dudit réseau SWAP et la mise en relation de ces entités 10, 20 qu'après vérification de la concordance de leurs critères d'empathie G, Q, E. La sélection des entités 10, 20 à mettre en relation s'effectue donc "à la source", c'est-à-dire avant l'établissement de la communication entre elles, ce qui présente de nombreux avantages tant au niveau de l'optimisation des réseaux ou canaux de communication que de la sécurité des échanges. Une fois le réseau SWAP créé, les entités 10, 20 peuvent communiquer entre elles, de manière unilatérale ou bilatérale, par ondes de radiofréquence dans une zone d'émission et/ou de réception prédéterminée en fonction de la puissance des émetteurs et/ou récepteurs intégrés dans lesdites entités 10, 20. Le logiciel d'application permet d'adapter le procédé selon l'invention à une application donnée et de définir la nature des critères d'empathie G, Q, E, la nature des informations échangées, le mode de communication, etc. comme expliqué par la suite dans les exemples décrits.

Pour effectuer cette mise en relation conditionnelle, ce procédé comporte les étapes suivantes :
a) une étape d'exploration dans laquelle chaque entité 10, 20, ou au moins l'une d'entre elles, explore la zone géographique correspondant à sa zone d'émission et/ou de réception prédéterminée pour rechercher les autres entités 10, 20 présentes dans cette zone géographique,
b) une étape de sélection dans laquelle chaque entité 10, 20, ou au moins une, compare les critères d'empathie G, Q, E des entités 10, 20 présentes et ne sélectionne que les entités 10, 20 dites élues dont les critères d'empathie G, Q, E concordent avec les siens, et
c) une étape de mise en relation M dans laquelle on crée un réseau SWAP privilégié entre les entités 10, 20 élues de manière fugitive, c'est-à-dire tant que leurs critères d'empathie G, Q, E concordent, et on permet l'échange d'informations entre les entités 10, 20 élues selon une application donnée.

Les critères d'empathie G, Q, E sont définis en fonction de l'application que l'on souhaite réaliser. Une fois définis, ces critères empathie G, Q, E ne sont pas figés ou statiques. Ils peuvent évoluer ou changer au cours de l'application. On dit qu'ils sont dynamiques. L'exemple donné à la figure 1 tient compte de trois critères d'empathie G, Q et E et n'est pas exhaustif, tout autre critère d'empathie étant envisageable. De même, le nombre de critères d'empathie n'est pas limité. De plus, ces critères d'empathie peuvent être hiérarchisés ou non, c'est-à-dire classés par ordre d'importance. Enfin, un même critère d'empathie peut contenir plusieurs sous-critères d'empathie qui peuvent également être hiérarchisés ou non.
G = critère d'empathie géographique, symbolisé par une mappemonde, correspond au moins à la zone maximale d'émission et/ou de réception par ondes de radiofréquence des entités 10, 20,
Q = critère d'empathie qualitatif, symbolisé par une clé, correspond au moins à un code d'accès, un code d'identification ou à tout autre code, se présentant sous la forme d'une clé informatique, d'une combinaison de clés informatiques, d'une clé d'authentification pour des questions de sécurité,
E = critère d'empathie environnemental, symbolisé par un réveil, correspond au moins à un événement externe tel qu'une donnée horaire, un signal venant d'un capteur ou d'une alarme, un message par courrier électronique ou par téléphone portable, un signal de positionnement donné par un GPS (General Positioning System), par un code à barres, par une étiquette électronique (RFID) ou tout autre évènement équivalent.

La mise en relation M consiste au moins à :
◆ ouvrir un canal de communication entre les entités 10, 20,
◆ les avertir qu'elles sont élues et qu'elles peuvent être mises en relation M par un signal sonore et/ou visuel, et
◆ échanger les informations prédéfinies en fonction d'une application donnée, par téléchargement ou non, sous forme de messages visuels, audio, multimédias ou d'une mise en relation vocale ou tout autre type informations, pouvant être cryptées pour des applications spécifiques nécessitant une mise en relation sécurisée par tout moyen adéquat, extérieur ou intégré au procédé de l'invention.

Selon les applications et modes de fonctionnement choisis, la mise en relation M entre les entités 10, 20 s'effectue soit de manière unilatérale en mode "maître-esclave", habituellement symbolisé 1-to-N ou appelé "scanning", soit de manière interactive en mode "conférence" habituellement symbolise N-to-N ou appelé "meshed".

Cette mise en relation M s'effectue de manière fugitive, c'est-à-dire qu'elle est interrompue immédiatement si l'un des critères d'empathie disparaît et par exemple :
◆ pour le critère d'empathie géographique G, si les zones d'émission et/ou de réception des entités 10, 20 ne se chevauchent plus,
◆ pour le critère d'empathie qualitatif Q, s'il y a perte de concordance des clés entre les entités 10, 20,
◆ pour le critère d'empathie environnemental E, si un événement extérieur demande la rupture de la liaison entre les entités 10, 20, par exemple pour effectuer une autre mise en relation.

Si les critères d'empathie G, Q, E concordent et la mise en relation M ne s'effectue pas, le procédé prévoit l'émission d'un message d'erreur à destination des entités 10, 20 élues.

De même, une sécurité permet d'éviter les pertes intempestives de la liaison radio par effet de bordure. A cet effet, les modules SWAP 11, 21 gèrent une fonction d'hystérésis.

Le module SWAP 11, 21 est décrit plus en détail en référence à la figure 2 qui représente schématiquement les différentes étapes amenant à la mise en relation M entre les entités 10, 20. Ces étapes sont appelées des niveaux d'implémentation et sont au nombre de trois :
- le **niveau 0** correspond à l'étape (a) dite d'exploration au cours de laquelle les entités 10, 20 explorent leur zone géographique correspondant à leur zone d'émission et/ou de réception prédéterminée pour rechercher les autres entités 10, 20 présentes,
- le **niveau 1** correspond à l'étape (b) dite d'empathie au cours de laquelle les entités présentes 10, 20 comparent leurs critères d'empathie G, Q, E pour ne sélectionner que les entités 10, 20 dites élues pour lesquelles les critères d'empathie G, Q, E concordent, et
- le **niveau 2** correspond à l'étape (c) dite d'application au cours de laquelle les entités 10, 20 élues sont mises en relation M et s'échangent des informations en fonction d'une application donnée.

Ainsi, le module SWAP 11, 21 permet de séparer de façon logique les aspects "applicatifs", à savoir la mise en relation et la transmission d'informations selon une application donnée, des aspects "réseaux", à savoir la détection des entités 10, 20 dites "présentes" puis la sélection des entités 10, 20 dites "élues" en fonction des critères d'empathie G, Q, E.

Ce procédé de mise en relation a l'avantage d'optimiser la performance des réseaux de communication sans fil entre les entités 10, 20 en procédant à un tri desdites entités 10, 20 en amont de la mise en relation. Ainsi, les temps de réponse sont réduits et l'utilisation de la bande passante est optimisée. En effet, ce procédé ne gère que les entités 10, 20 élues et non pas toutes les entités en présence dans une zone géographique donnée. Cette optimisation permet également de remplir une fonction dite "anti-spam" qui élimine automatiquement toute tentative de mise en relation non désirée ainsi qu'une fonction dite "sécurité" qui empêche automatiquement toute mise en relation avec des entités malveillantes cherchant à entrer dans le réseau SWAP par infraction.

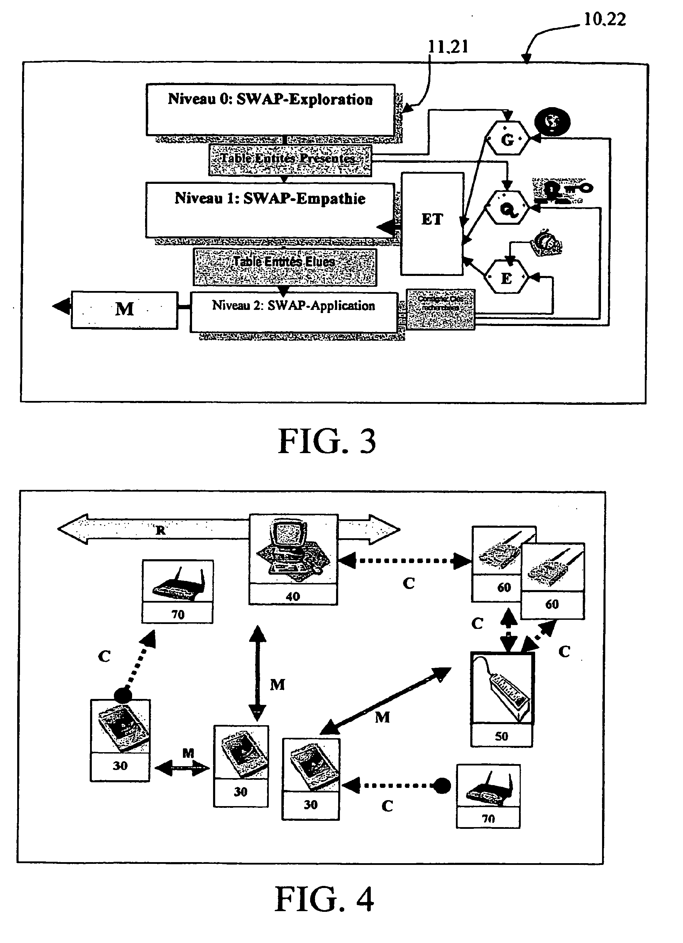

Le mécanisme du module SWAP 11, 21 est représenté à la figure 3 dans laquelle les trois niveaux dimplémentation se retrouvent. Le niveau 0 d'exploration permet de détecter les entités 10, 20 présentes par leur adresse MAC (Medium Access Code), de balayer leurs clés de reconnaissance (critère qualitatif Q) et de mesurer leur puissance d'émission reçue (critère géographique G). Les entités 10, 20 présentes sont répertoriées dans une table "entités présentes" mise à jour par le module SWAP, puis sont triées automatiquement par le niveau 1 d'empathie associé à une fonction logique ET qui combinent leurs critères d'empathie G, Q, E. Les entités 10, 20 élues sont répertoriées dans une table "entités élues" où elles sont identifiées par une adresse IP (Internet Protocol). Elles sont ensuite mises en relation au niveau 2 d'application. Le dialogue entre les entités 10, 20 élues s'effectue au moyen d'interfaces informatiques classiques tels que clavier, écran, souris, microphone, etc. Le niveau 2 d'application, lié au logiciel d'application, permet de déterminer les critères d'empathie G, Q, E choisis pour une application donnée et de gérer éventuellement d'autres applications et/ou de communiquer avec d'autres applications.

L'équipement permettant de mettre en oeuvre le procédé de mise en relation selon invention comporte au moins deux entités 10, 20 comme expliqué précédemment, appelées entités SWAP, pouvant être de types différents, dont quelques exemples sont représentés à la figure 4. Le choix parmi ces différents types d'entités SWAP et leur combinaison s'effectue en fonction d'une application donnée. On trouve :
◆ des terminaux nomades 30 constitués d'assistants personnels (PDA) et/ou d'ordinateurs personnels indépendants,
◆ un serveur 40 constitué d'un poste informatique fixe centralisateur pouvant être connecté à un réseau informatique tel qu'un Intranet ou Internet symbolisé par la double flèche R,
◆ une borne universelle 50 constituée d'une borne informatique autonome, qui fait office de serveur local indépendant.

Toutes ces entités SWAP 30, 40, 50 sont équipées du module SWAP et peuvent communiquer entre elles de manière spontanée, sécurisée, autonome, fugitive et sans fil, si leurs critères d'empathie G, Q, E concordent. Leur mise en relation est symbolisée par les flèches M pleines et doubles.

A cet équipement peuvent s'ajouter des entités auxiliaires, appelées entités non SWAP, parce que non équipées du module SWAP mais pouvant communiquer sans fil par ondes de radiofréquence avec les entités SWAP 30, 40, 50. Leur communication est symbolisée par les flèches C simples ou doubles en pointillés. Parmi ces entités auxiliaires, on trouve :
◆ une borne industrielle 60 qui permet la collecte sans fil, vers le serveur 40, de données industrielles issues par exemple de capteurs, d'automates industriels, d'appareils de mesure, de caméras ou webcams, etc.,
◆ une borne de localisation 70 qui permet de localiser géographiquement les entités SWAP, notamment les terminaux nomades 30, et de déterminer ainsi leur critère d'empathie géographique G.

L'architecture des entités SWAP 30, 40, 50 qui sont au départ constitués d'éléments standards du marché est détaillée dans ce qui suit.

Le terminal nomade 30 peut être un assistant personnel ou un ordinateur personnel qui permet de réceptionner et d'afficher des informations provenant soit d'un autre terminal nomade 30, d'un serveur 40 ou de reconnaître sa position par rapport à une borne universelle 50. Son architecture standard comporte une unité centrale, une unité mémoire pour stocker l'information, une unité de traitement de l'information, des interfaces de communication sans fil (Wi-Fi par exemple) et de téléchargement. Pour faire partie de l'équipement selon l'invention, on ajoute à ce terminal nomade 30 un module SWAP qui intègre les différents niveaux d'implémentation de 0 à 2. Ce terminal nomade 30 ainsi équipé peut au moins gérer le critère d'empathie qualitatif Q par son interface de téléchargement via un fichier de configuration issu de l'application et le critère d'empathie géographique G par rapport aux autres entités SWAP par une borne de localisation 70 permettant le calcul de la puissance de réception des ondes de radiofréquence. Dans une configuration minimale, l'équipement selon l'invention ne comporte que ces terminaux nomades 30 et des bornes de localisation 70. Dans ce cas, ils comportent le ou les logiciels d'application et peuvent également contrôler le critère d'empathie environnemental E.

Dans une configuration plus évoluée de l'équipement selon l'invention, le serveur 40 considéré comme le coeur de cet équipement assure une fonction globale de gestion des informations pour l'ensemble des entités SWAP faisant partie de cet équipement. Son architecture standard comporte une station de travail (écran, clavier, souris), une unité centrale, une unité mémoire pour stocker l'information, une unité de traitement de l'information, un modem pour accéder à un réseau informatique, des interfaces de communication sans fil (Wi-Fi par exemple) et de téléchargement. Pour faire partie de l'équipement selon l'invention, on ajoute à ce serveur 40 un module SWAP qui intègre les différents niveaux d'implémentation de 0 à 2. Ce serveur 40 peut interagir avec les terminaux nomades 30 tout en se connectant sur un réseau informatique R existant. Il peut aussi communiquer avec des entités non SWAP, telles que des bornes industrielles 60, et/ou être muni d'une borne de localisation pour ajouter le critère d'empathie géographique G au niveau 1 d'empathie.
Dans le cas d'une application culturelle par exemple, le serveur 40 distribue aux terminaux nomades 30 des informations en fonction de leurs critères d'empathie G, Q, E et notamment en fonction de leur localisation.

Dans le cas d'une application industrielle par exemple, le serveur 40 récupère en temps réel des informations provenant de bornes industrielles 60 en présence et les stocke. Les alarmes et les dépassements de seuil sont calculés à partir de l'application spécifique et diffusés via le canal de communication aux terminaux nomades 30 en concordance.

La borne universelle 50 est constituée d'une borne informatique fixe ou embarquée. Son architecture standard comporte une unité centrale, une unité mémoire pour stocker l'information, une unité de traitement de l'information, des interfaces de communication sans fil (Wi-Fi) et de téléchargement. Pour faire partie de l'équipement selon invention, on ajoute à cette borne universelle 50 un module SWAP qui intègre les différents niveaux d'implémentation de 0 à 2. Cette borne universelle 50 peut avoir les mêmes fonctions que le serveur 40 mais limitées à un environnement local et sans interaction avec un réseau filaire externe.
Cette borne universelle 50 peut interagir avec les terminaux nomades 30 au niveau local. Elle peut aussi communiquer avec des entités non SWAP, telles que des bornes industrielles 60, et/ou être muni d'une borne de localisation pour ajouter le critère d'empathie géographique G au niveau 1 d'empathie.

En fonction des applications et des contraintes économiques, le procédé de mise en relation selon l'invention peut se décliner en au moins cinq modes de fonctionnement différents.

### Mode n°1 : Informations contenues dans les terminaux nomades 30

Dans cette application, l'équipement comporte des terminaux nomades 30 et des bornes de localisation 70 qui fournissent auxdits terminaux nomades 30 le critère d'empathie géographique G (distance entre borne de localisation 70 et terminal nomade 30) et le critère d'empathie qualitatif Q (code d'identification de la borne de localisation par exemple). L'empathie s'effectue au niveau des terminaux nomades 30 qui affichent les informations correspondantes qu'ils ont en mémoire. Il n'y a pas d'établissement de communication avec les bornes de localisation 70. Le protocole de communication SWAP agit uniquement au niveau applicatif résidant dans le terminal nomade 30. Les avantages de cette configuration résident dans le faible coût de l'installation, des bornes de localisation 70 déjà existantes pouvant même être utilisées, la possibilité d'utiliser un nombre illimité de bornes de localisation 70 et le fait qu'il n'existe aucune contrainte géographique, il suffit que le terminal nomade 30 passe à proximité de la borne de localisation 70. Les inconvénients de cette configuration résident dans le fait qu'elle est figée, toute modification des informations doit être répercutée sur chaque terminal nomade 30, qu'il n'y a pas d'interactivité avec les bornes de localisation 70, ces bornes étant inactives, donc ne permettant ni un échange d'informations ni un stockage de ces informations. Le nombre de bornes de localisation 70 dépend de la capacité de stockage des informations dans les terminaux nomades 30.

### Mode n°2 : Informations téléchargées via un serveur 40 relié à un réseau Internet ou Intranet

Dans cette application, l'équipement comporte un serveur 40, des terminaux nomades 30 et des bornes de localisation 70 qui fournissent auxdits terminaux nomades 30 les critères d'empathie géographique G et une partie des critères qualitatifs Q. L'empathie s'effectue entre les terminaux nomades 30 et le serveur 40 qui leur envoie par téléchargement les informations correspondantes. Il n'y a pas de communication avec les bornes de localisation 70. Les avantages de cette configuration résident dans le faible coût de installation, des bornes de localisation 70 déjà existantes pouvant même être utilisées, la possibilité d'utiliser un nombre illimité de bornes de localisation 70, le fait qu'il n'existe aucune contrainte géographique, il suffit que le terminal nomade 30 passe à proximité de la borne de localisation 70 et le fait que la mise à jour des informations est possible via le serveur 40. Les inconvénients de cette configuration résident dans le fait qu'il n'y a pas d'interactivité avec les bornes de localisation 70, que ces bornes sont inactives et que la couverture géographique du serveur 40 doit englober toutes les bornes de localisation 70 étant donné qu'à chaque borne de localisation 70 le terminal nomade 30 doit être en mesure de se mettre en relation avec le serveur 40. Cette configuration n'est possible que dans un espace limité.

### Mode n°3 : Informations contenues dans le serveur 40 (informations statiques résidantes ou mises à jour dans le serveur 40)

Dans cette application, l'équipement comporte un serveur 40, des terminaux nomades 30 et des bornes de localisation 70 qui fournissent auxdits terminaux nomades 30 les critères d'empathie géographique G et qualitatif Q. L'empathie s'effectue entre les terminaux nomades 30 et le serveur 40 qui leur envoie par téléchargement les informations correspondantes et permet une interactivité entre eux. Il n'y a pas de communication avec les bornes de localisation 70. Les avantages de cette configuration résident dans le faible coût de l'installation, des bornes de localisation 70 déjà existantes pouvant même être utilisées, la possibilité d'utiliser un nombre illimité de bornes de localisation 70, le fait qu'il n'existe aucune contrainte géographique, il suffit que le terminal nomade 30 passe à proximité de la borne de localisation 70, le fait que les informations soient centralisées dans le serveur 40 et accessibles par empathie depuis les terminaux nomades 30, l'interactivité entre les terminaux nomades 30 et le serveur 40, et le stockage possible des informations sur les terminaux nomades 30 par téléchargement depuis le serveur 40. Les inconvénients de cette configuration résident dans le fait qu'il n'y a pas d'interactivité avec les bornes de localisation 70, que ces bornes sont inactives et que la couverture géographique du serveur 40 doit englober toutes les bornes de localisation 70 étant donné qu'à chaque borne de localisation 70 le terminal nomade 30 doit être en mesure de se mettre en relation avec le serveur 40. Cette configuration n'est possible que dans un espace limité.

### Mode n°4 : Informations contenues dans une borne universelle 50

Dans cette application, l'équipement comporte un serveur 40, des terminaux nomades 30 et au moins une borne universelle 50 qui fait office de serveur local et de borne de localisation. Les informations fournies à la borne universelle 50 par le serveur 40 sont accessibles depuis les terminaux nomades 30 en fonction des critères d'empathie G, Q, E. Les avantages de cette configuration résident dans la possibilité d'utiliser un nombre illimité de bornes universelles 50, sans contrainte géographique, il suffit que le terminal nomade 30 passe à proximité de la borne universelle 50, le fait que les informations soient contenues dans la borne universelle 50 et accessibles par empathie depuis les terminaux nomades 30, l'interactivité entre eux est maximale et le stockage possible des informations sur les terminaux nomades 30 par téléchargement depuis la borne universelle 50. Les inconvénients de cette configuration résident dans le nombre et donc le coût de mise en place des bornes universelles 50.

### Mode n°5 : Mise en relation entre terminaux nomades 30

Dans cette application, l'équipement ne comporte que des terminaux nomades 30 et permet le dialogue, l'interactivité et l'échange d'informations entre les terminaux nomades 30 en mode autonome dit "Mode Ad Hoc" sans serveur en fonction des critères d'empathie G, Q, E. Les avantages de cette configuration résident dans une configuration minimale de l'équipement, toutes les entités SWAP étant mobiles, une des entités SWAP particulière pouvant faire office de "borne itinérante", c'est-à-dire que cette "borne itinérante" déplace sa zone géographique d'émission/réception en se déplaçant. Les inconvénients de cette configuration résident dans le fait qu'elle ne peut pas gérer le critère d'empathie géographique G, la distance entre les terminaux nomades 30 n'étant pas prise en compte. Toutefois, ces inconvénients peuvent être contournés en équipant la "borne itinérante" d'une borne de localisation pour intégrer le critère d'empathie géographique G.

Grâce à ces différentes configurations et à la souplesse du module de mise en relation SWAP, le procédé de mise en relation selon l'invention permet d'envisager des applications très diverses classées en trois catégories.

### 1- Applications locales

Ces applications sont agencées pour gérer des entités SWAP à un niveau local et de manière autonome, sans mise en relation avec une ou plusieurs entités SWAP distantes. Elles utilisent les niveaux d'implémentation : 0 d'exploration et 1 d'empathie mais pas le niveau 2 d'application. On peut citer :
◆ le mode test desdites entités SWAP qui permet d'assurer leur maintenance, la vérification de leurs critères d'empathie et de leur couverture géographique, etc.
◆ la surveillance desdites entités SWAP présentes et élues,
◆ le diagnostic en cas de dysfonctionnement desdites entités SWAP ou de leur mise en relation.

### 2- Applications partagées

Ces applications sont agencées pour gérer la mise en relation de plusieurs entités SWAP distantes et non et pour partager les informations entre elles. On peut citer :
◆ le mode test pour vérifier la mise en relation entre les différentes entités SWAP,
◆ la gestion des entités SWAP élues soit en mode "maître-esclave" 1-to-N, soit en mode "conférence" N-to-N,
◆ l'échange d'informations entre lesdites entités SWAP.

### 3- Applications diffusées ou appelées "broadcast"

Ces applications sont agencées pour diffuser simultanément et de manière unidirectionnelle des informations vers l'ensemble des entités SWAP élues. On peut citer :
◆ le mode test pour vérifier la mise en relation entre les différentes entités SWAP,
◆ la diffusion de messages publicitaires, d'informations de service, d'alarmes, d'alertes, de consignes de sécurité, etc.

Pour améliorer la compréhension du procédé selon l'invention, deux exemples d'application concrète vont être décrits en détail, l'un dans le domaine de la surveillance et de la maintenance de sites industriels ou tertiaires et l'autre dans le domaine de la visite interactive de sites culturels, salons professionnels ou expositions commerciales.

### Application 1 : Surveillance et/ou maintenance de sites industriels

L'application consiste à délivrer au personnel de la sécurité et/ou de la production et/ou de la maintenance via leur terminal nomade 30 des informations sur l'état et les alarmes des installations industrielles à maintenir et/ou à surveiller en fonction de leurs droits d'accès, de leur positionnement dans le site, de leur heure de passage, etc. et à leur fournir des consignes pertinentes pour une intervention rapide et efficace. Dans cette application, les critères d'empathie G, Q, E peuvent être définis comme suit :
Critère géographique G : distance graduelle par rapport à l'incident, distance programmée (points de passage), zone géographique couvrant l'ensemble du site notamment pour la diffusion d'informations (alarme).
Critère qualitatif Q : identification du processus industriel, du site ou de la machine à maintenir et/ou à surveiller, signature de intervenant, mot de passe informatique, qualification de l'intervenant (habilitation, spécialité, etc.).
Critère environnemental E : appel externe (message SMS), période temporelle de maintenance préventive et/ou de surveillance, détection des points de passage.

Les fonctions principales réalisées par cette application sont par exemple :
Collecte d'informations : Cette fonction est déclenchée en cas d'alerte et permet à un intervenant identifié de se connecter via son terminal nomade 30 sur une entité fixe telle qu'une borne universelle 50 distante, un serveur 40 centralisateur, ou sur le réseau Intranet de l'entreprise via un serveur 40, pour collecter les informations en provenance de bornes industrielles 60 équipées de capteurs en tout ou rien, analogiques ou vidéos.
Contrôle d'accès : L'intervenant en charge de la maintenance et/ou de la surveillance dispose de clés d'identification et d'authentification sophistiquées et ne peut se connecter à ladite borne universelle 50 ou audit serveur 40 qu'après reconnaissance d'une combinaison de ces clés.
Suivi de visite et rapport d'inspection : L'application autorise les connexions successives aux bornes industrielles 60 concernées par les intervenants via leur terminal nomade 30 suivant le planning des rondes de surveillance ou d'inspection pré établi. Elle permet ainsi de gérer les passages des intervenants (chronologie, horodatage, états de machines) et de signaler instantanément tout incident de parcours. L'application mémorise et stocke automatiquement les étapes de la tournée. Dans une application plus simple, le terminal nomade 30 se positionne par rapport à la borne de localisation 70 (critère G), l'intervenant peut alors renseigner son diagnostic en manuel sur le terminal nomade 30. Cette configuration ne nécessite pas de serveur 40, ni de borne universelle 50, l'ensemble des informations étant résidantes dans le terminal nomade 30.
Recherche de personnes et collaboration : Cette fonction se déclenche si la personne concernée a besoin d'une aide de proximité (gardien, collègue, etc.). Par simple reconnaissance des clés d'identification et d'authentification, il est possible de connecter entre eux les terminaux nomades 30 des intervenants présents dans la même zone géographique.
Support à la maintenance : La collecte d'informations et la mise en relation des intervenants habilités permettent leur collaboration en vue de la résolution d'un problème.
Connexion vers un réseau existant : En cas de besoin d'une aide d'un intervenant extérieur, les informations collectées sur le site peuvent être envoyées à distance depuis un réseau Intranet ou Internet. L'application peut être connectée en particulier au programme de Gestion de Production Assistée par Ordinateur (GPAO) et/ou de Gestion de la Maintenance Assistée par Ordinateur (GMAO) de l'entreprise. Une alerte peut être générée par un intervenant depuis son terminal nomade 30 via les réseaux de communication traditionnels GSM/GPRS pour alerter le personnel d'astreinte par exemple.

Les avantages obtenus par l'utilisation du procédé de mise en relation selon l'invention dans ce type d'applications sont nombreux :
Un accès sélectif et sécurisé à l'application : Cette sélectivité n'est pas due uniquement à des choix définis par les logiciels d'application mais agit à la source (avant la mise en relation) en fonction des critères d'empathie tels que par exemple :
   ◆ Pour le critère qualitatif Q : la combinaison de clés de reconnaissance comprenant l'identité de l'intervenant, sa fonction, ses habilitations, l'identité de la borne de localisation 70, et la nature du problème à résoudre,
   ◆ Pour le critère géographique G : la position géographique du terminal nomade 30 de l'intervenant par rapport à une borne de localisation 70,
   ◆ Pour le critère environnemental E : la plage horaire autorisée pour l'intervention.
Un accès interactif à l'application : L'interactivité est assurée à la fois par les terminaux nomades 30 qui peuvent accéder de manière asynchrone à une borne universelle 50 ou un serveur 40 unique (configuration "1 to N"), et par la borne universelle 50 ou le serveur 40 unique qui peut diffuser en permanence de l'information vers tous les terminaux nomades 30 répondant aux critères d'empathie (configuration "broadcast").
L'établissement de réseaux fugitifs : Les bornes universelles 50 ne sont connectées à aucun réseau informatique centralisé. Elles sont indépendantes les unes des autres et ne nécessitent qu'une alimentation en énergie, ce qui évite tout câblage informatique supplémentaire. Les réseaux de communication créés entre une borne universelle 50 et des terminaux nomades 30 sont fugitifs et ne persistent que si les critères d'empathie concordent. Le procédé de mise en relation de l'invention permet ainsi de gérer en permanence des réseaux de communication fugitifs indépendants les uns des autres couvrant une même superficie géographique mais avec des zones de reconnaissance différentes pouvant ou non se recouvrir.
Un échange d'informations du type multimédia interactif : Les informations échangées entre une borne universelle 50 et des terminaux nomades 30 peuvent être du type multimédia : voix, bandes sons, données, images, clips vidéo, dessins animés, etc.). Ces informations sont converties pour être exploitables par les terminaux nomades 30.
Un stockage de la "mémoire" de l'intervention : Le procédé permet d'enregistrer les informations échangées à la fois sur le terminal nomade 30 où sont stockés la "trace" de l'intervention, le compte-rendu de l'intervenant et l'historique de toutes les interventions liées au problème à résoudre, et sur la borne universelle 50 ou le serveur 40 où sont stockées les informations relatives au processus industriel à surveiller et/ou à maintenir.

### Application 2 : Visite interactive de sites culturels, salons professionnels ou expositions commerciales

L'application consiste à délivrer des informations du type multimédia au visiteur suivant son positionnement dans le site et lui offrir la possibilité de choisir le niveau d'approfondissement qu'il souhaite. Pour ce faire, le visiteur dispose d'un terminal nomade 30, constitué par exemple d'un livre électronique à écran tactile du type PDA, connecté à un réseau informatique sans fil. Ce terminal nomade 30 lui est prêté lorsqu'il entre dans le site et lui permet de personnaliser sa visite en choisissant ses thèmes. A la sortie, il restitue le terminal nomade 30 en échange du contenu de sa visite sous la forme numérique (CD, disquette), papier, par courrier électronique ou par le réseau Internet sur l'adresse du site au moyen d'un mot de passe attribué. Dans cette application, les critères d'empathie G, Q, E peuvent être définis comme suit :
Critère géographique G : distance par rapport à une borne de localisation 70 ou une borne universelle 50, zone géographique couvrant l'ensemble du site notamment pour la diffusion d'informations générales,
Critère qualitatif Q : zone d'intérêt (salle d'exposition, oeuvre, etc.), niveau de visite (grand public, scolaire, expert, etc.), langue,
Critère environnement E : période temporelle, message externe par SMS, diffusion d'informations générales, étiquette électronique (code à barres ou RFID).

Les fonctions principales réalisées par cette application sont par exemple :
Niveaux d'approfondissement : Les visiteurs n'ayant pas les mêmes centres d'intérêt, le procédé selon l'invention permet à chacun de personnaliser sa visite et d'approfondir certains thèmes. A cet effet, une interface graphique intégrée dans les terminaux nomades 30 propose plusieurs niveaux d'approfondissement :
   ◆ Niveau classique destiné au grand public et délivrant des informations simples, claires et attractives,
   ◆ Niveau expert destiné aux spécialistes ou professionnels et délivrant des informations très pointues et techniques,
   ◆ Niveau scolaire destiné aux enfants et délivrant des informations pédagogiques et ludiques.
Mémoire de la visite : Le visiteur peut conserver les informations qui intéressent tout particulièrement parmi celles collectées lors de sa visite dans son terminal nomade 30. Le contenu qu'il a sélectionné lui est restitué sur un format papier ou électronique, lui permettant ainsi de garder une "trace" de sa visite.
Localisation géographique : La technologie sans fil (WLAN/Wi-Fi) permet d'y associer un dispositif de localisation géographique des terminaux nomades 30 par exemple par des bornes de localisation 70 ou par tout autre système permettant le calcul de la distance géographique (GPS par exemple). L'application est aussi capable de localiser précisément chaque visiteur dans le site et de connaître le nombre de visiteurs par salle ou zone. Cette information peut être diffusée aux exploitants des sites pour optimiser la visite.
Diffusion d'informations localisées : Grâce à la localisation géographique de chaque visiteur, l'application diffuse à chacun des informations interactives cohérentes avec son itinéraire. Par exemple, lorsqu'un visiteur entre dans une salle de musée, l'application lui envoie les informations du type multimédia relatives aux oeuvres qu'il a en face de lui et correspondant aux thèmes qu'il a lui-même sélectionnés. De cette manière, le visiteur n'a pas à faire le tri parmi le flux d'informations qu'il reçoit.
Communication entre visiteurs : L'application permet de créer entre terminaux nomades 30 un espace de discussion privilégié en fonction de critères d'empathie prédéterminés tels que la nationalité, la langue, l'age, le niveau de culture, les visites groupées, la recherche d'expertise.

Les avantages obtenus par l'utilisation du procédé de mise en relation selon l'invention dans ce type d'applications sont similaires à ceux obtenus dans l'application décrite précédemment à savoir :
◆ un accès sélectif à l'application,
◆ un accès interactif à l'application,
◆ l'établissement de réseaux fugitifs,
◆ un échange d'informations du type multimédia interactif,
◆ un stockage de la "mémoire" de la visite.

Bien entendu d'autres applications sont envisageables dans d'autres domaines tels que par exemple la santé, pour la gestion des données médicales liées au dossier d'un patient ; le transport, pour l'accès aux moyens de transport, le contrôle et le paiement ; etc. La présente invention n'est pas limitée aux exemples de réalisation et d'application décrits mais s'étend à toute modification et variante évidentes pour un homme du métier tout en restant dans l'étendue de la protection définie dans les revendications annexées.

## Revendications

1. Procédé de mise en relation sans fil, sélective et spontanée d'au moins deux entités (10, 20) indépendantes comportant chacune au moins un module de communication par ondes de radiofréquence agencé pour émettre et/ou réceptionner des informations dans une zone d'émission prédéterminée et programmable, tel que l'on équipe chaque entité (10, 20) d'au moins un logiciel déterminant une application donnée et d'au moins un module de mise en relation (11, 21), que l'on définit des critères d'empathie (G, Q, E) pour chacune des entités (10, 20) et en fonction de ladite application donnée, et que ledit procédé comporte au moins les étapes suivantes :
◆ une étape d'exploration au cours de laquelle le module de mise en relation (11, 21) de chaque entité (10, 20) explore une zone géographique correspondant sensiblement à sa zone d'émission prédéterminée pour rechercher les autres entités (10, 20) présentes dans cette zone géographique, et
◆ une étape de sélection au cours de laquelle le module de mise en relation (11, 12) de chaque entité (10, 20) compare les critères d'empathie (G, Q, E) des entités présentes et ne sélectionne que les entités (10, 20) dites élues dont les critères d'empathie (G, Q, E) concordent avec les siens; **caractérisé en ce que** le procédé comporte aussi
◆ une étape de mise en relation au cours de laquelle le module de mise en relation (11,12) crée un réseau de communication privilégié, sans fil, spontané, sélectif et fugitif entre lesdites entités (10, 20) dites élues pour leur permettre d'échanger lesdites informations en fonction de ladite application donnée, tant que leurs critères d'empathie (G, Q, E) concordent.

2. Procédé selon la revendication 1, **caractérisé en ce que** toutes les entités (10, 20) sont autonomes, non connectées à un réseau informatique existant, et **en ce que** ledit procédé fonctionne en mode autonome dit Ad Hoc.

3. Procédé selon la revendication 1, **caractérisé en ce qu'**au moins une entité (10, 20) est connectée à un réseau informatique existant tel qu'un Intranet ou l'Internet et **en ce que** ledit procédé fonctionne en mode infrastructure.

4. Procédé selon la revendication 1, **caractérisé en ce que**, dans l'étape de mise en relation, le module de mise en relation (11, 21) avertit chaque entité (10, 20) dite élue par un signal sonore et/ou visuel.

5. Procédé selon la revendication 1, **caractérisé en ce que** toutes les entités (10, 20) sont mobiles.

6. Procédé selon la revendication 1, **caractérisé en ce qu'**au moins une entité (10, 20) est fixe.

7. Procédé selon la revendication 1, **caractérisé en ce que**, selon les applications dudit procédé et la nature desdites informations, le module de mise en relation (11, 21) crée ledit réseau de communication de manière unilatérale en mode "maître-esclave" dans lequel une entité (10, 20) communique vers les autres entités (10, 20) ou de manière interactive en mode "conférence" dans lequel les entités (10, 20) communiquent entre elles.

8. Procédé selon la revendication 1, **caractérisé en ce que** l'on choisit lesdites entités (10, 20) dans le groupe comprenant les assistants personnels PDA, les tablettes PC, les téléphones portables, les bornes informatiques Hot Spot fixes indépendantes ou reliées à un réseau informatique, les ordinateurs fixes ou portables indépendants ou reliés à un réseau informatique.

9. Procédé selon la revendication 1, **caractérisé en ce que** l'on ajoute des entités auxiliaires, non équipées du module de mise en relation, agencées pour fournir aux dites entités (10, 20) des données telles qu'une localisation géographique des entités (10, 20), des paramètres industriels provenant d'appareils de mesure.

10. Procédé selon la revendication 1, **caractérisé en ce que** l'on choisit lesdites informations dans le groupe comprenant les informations sous forme visuelle, sous forme audio, sous forme multimédia, sous forme cryptée.

11. Procédé selon la revendication 1, **caractérisé en ce que** l'on définit au moins un critère d'empathie choisi parmi le groupe comprenant des critères d'empathie géographique (G) agencés pour déterminer la distance entre lesdites entités (10, 20), des critères d'empathie qualitatif (Q) agencés pour identifier lesdites entités (10, 20), des critères d'empathie environnemental (E) agencés pour tenir compte d'un événement extérieur comme une donnée horaire, un signal, un message.

12. Procédé selon la revendication 11, **caractérisé en ce qu'**au moins un critère d'empathie (G, Q, E) est dynamique et modifiable par ledit logiciel d'application.

13. Procédé selon la revendication 11, **caractérisé en ce que** l'on définit au moins deux critères d'empathie (G, Q, E) différents et cumulatifs.

14. Procédé selon la revendication 11, **caractérisé en ce que** l'on définit dans au moins un critère d'empathie (G, Q, E) plusieurs sous-critères d'empathie.

15. Procédé selon la revendication 13 ou 14, **caractérisé en ce que** l'on classe lesdits critères d'empathie ou sous-critères d'empathie par ordre d'importance.

16. Procédé selon la revendication 1, **caractérisé en ce que** l'on envoie un message d'erreur aux entités (10, 20) dites élues dans le cas où le réseau de communication ne se crée pas alors que leurs critères d'empathie (G, Q, E) concordent.

17. Equipement de mise en relation sans fil, sélective et spontanée d'au moins deux entités (10, 20) indépendantes, ledit équipement comportant au moins lesdites deux entités, lesdites deux entités comportant chacune au moins un module de communication par ondes de radiofréquence agencé pour émettre et/ou réceptionner des informations dans une zone d'émission prédéterminée et programmable, tel que les entités (10, 20) comportent chacune au moins un logiciel déterminant une application donnée et au moins un module de mise en relation (11, 21) basée sur une reconnaissance préalable de critères d'empathie (G, Q, E) prédéterminés pour ladite application donnée, ces critères d'empathie (G, Q, E) étant prédéterminés pour ladite application donnée pour chacune des entités (10, 20), et le module de mise en relation (11, 21) de chacune des entités (10, 20) étant agencé pour:
◆ explorer la zone géographique correspondant sensiblement à sa zone d'émission prédéterminée pour rechercher les autres entités (10, 20) présentes dans cette zone géographique, et
◆ sélectionner parmi les entités présentes les entités (10, 20) dites élues dont les critères d'empathie (G, Q, E) prédéterminés concordent avec les siens; **caractérisé en ce que** ledit module de mise en relation (11, 21) de chacune des entités (10, 20) est aussi agencé pour:
◆ créer un réseau de communication spécifique, sans fil, spontané, sélectif et fugitif entre les entités (10, 20) dites élues tant que leurs critères d'empathie (G, Q, E) concordent, et
◆ émettre et/ou diffuser entre les entités (10, 20) dites élues lesdites informations en fonction de ladite application donnée.

18. Equipement selon la revendication 17, **caractérisé en ce que** lesdites entités (10, 20) sont autonomes, non connectées à un réseau informatique existant.

19. Equipement selon la revendication 17, **caractérisé en ce que** lesdites entités comportent une interface agencée pour communiquer avec un réseau informatique existant tel qu'un Intranet ou l'Internet.

20. Equipement selon la revendication 17, **caractérisé en ce que** chaque entité (10, 20) comporte un avertisseur sonore et/ou visuel agencé pour la prévenir lorsqu'elle est une entité dite élue.

21. Equipement selon la revendication 17, **caractérisé en ce que** toutes les entités (10, 20) sont mobiles.

22. Equipement selon la revendication 17, **caractérisé en ce qu'**au moins une entité (10, 20) est fixe.

23. Equipement selon la revendication 17, **caractérisé en ce que** ledit module de mise en relation (11, 12) est agencé pour créer ledit réseau de communication de manière unilatérale en mode "maître-esclave" dans lequel une entité (10, 20) communique vers les autres entités (10, 20) ou de manière interactive en mode "conférence" dans lequel les entités (10, 20) communiquent entre elles.

24. Equipement selon la revendication 17, **caractérisé en ce que** lesdites entités (10, 20) sont choisies dans le groupe comprenant des terminaux nomades (30) tels que les assistants personnels PDA, les tablettes PC, les téléphones portables, des bornes universelles Hot Spot (50) fixes indépendantes ou reliées à un réseau informatique, des serveurs (40) tels que des ordinateurs fixes ou portables indépendants ou reliés à un réseau informatique.

25. Equipement selon la revendication 17, **caractérisé en ce qu'**il comporte des entités auxiliaires non équipées du module de mise en relation (11, 21) et choisies dans le groupe comprenant les bornes de localisation (70), les bornes industrielles (60) aptes à collecter des données industrielles.

26. Equipement selon la revendication 17, **caractérisé en ce que** lesdites informations sont sous forme de texte, sous forme audio, sous forme multimédia, sous forme cryptée.

27. Equipement selon la revendication 17, **caractérisé en ce que** lesdits critères d'empathie sont choisis parmi le groupe comprenant des critères d'empathie géographique (G) agencés pour déterminer la distance entre lesdites entités (10, 20), des critères d'empathie qualitatif (Q) agencés pour identifier lesdites entités (10, 20), des critères d'empathie environnemental (E) agencés pour tenir compte d'un événement extérieur comme une donnée horaire, un signal, un message.

28. Equipement selon la revendication 27, **caractérisé en ce qu'**au moins un critère d'empathie (G, Q, E) est agencé pour être dynamique et modifiable par ledit logiciel d'application.

29. Equipement selon la revendication 27, **caractérisé en ce que** lesdits critères d'empathie (G, Q, E) sont au moins au nombre de deux et **en ce qu'**ils sont différents et cumulatifs.

30. Equipement selon la revendication 27, **caractérisé en ce qu'**au moins un critère d'empathie (G, Q, E) comporte plusieurs sous-critères d'empathie.

31. Equipement selon la revendication 29 ou 30, **caractérisé en ce que** lesdits critères d'empathie ou sous-critères d'empathie sont classés par ordre d'importance.

32. Equipement selon la revendication 17, **caractérisé en ce que** ledit module de mise en relation (11, 21) est agencé pour envoyer un message d'erreur aux entités (10, 20) dites élues dans le cas où le réseau de communication ne se crée pas alors que leurs critères d'empathie (G, Q, E) concordent.

## Claims

1. A method for the wireless, selective and spontaneous connection of at least two independent entities (10, 20), each comprising at least a communication module using radiofrequency waves that is designed to emit and/or receive information in a predetermined, programmable emission zone, so that each entity (10, 20) is equipped with at least one software package determining a given application and with at least one connection module (11, 21), empathy criteria (G, Q, E) are defined for each of the entities (10, 20) and as a function of the given application, and the said method comprises at least the following stages:
• an exploration stage during which the connection module (11, 21) of each entity (10, 20) explores a geographical zone corresponding substantially to its predetermined emission zone in order to search for the other entities (10, 20) present in this geographical zone, and
• a selection stage during which the connection module (11, 12) of each entity (10, 20) compares the empathy criteria (G, Q, E) of the present entities and only selects the so-called chosen entities (10, 20) in which the empathy criteria (G, Q, E) agree with its own;
**characterised in that** the method also comprises
• a connection stage during which the connection module (11, 12) creates a communication network that is privileged, wireless, spontaneous, selective and transient between the so-called chosen entities (10, 20) to allow them to exchange the said items of information as a function of the said given application, as long as their empathy criteria (G, Q, E) agree.

2. A method according to Claim 1, **characterised in that** all the entities (10, 20) are autonomous, not connected to an existing computer network, and **in that** the said method operates in the so-called ad hoc autonomous mode.

3. A method according to Claim 1, **characterised in that** at least one entity (10, 20) is connected to an existing computer network such as an Intranet or the Internet and **in that** the said method operates in infrastructure mode.

4. A method according to Claim 1, **characterised in that** in the connection stage the connection module (11, 21) warns each so-called chosen entity (10, 20) by an audible and/or visual signal.

5. A method according to Claim 1, **characterised in that** all the entities (10, 20) are mobile.

6. A method according to Claim 1, **characterised in that** at least one entity (10, 20) is fixed.

7. A method according to Claim 1, **characterised in that**, according to the applications of the said method and the nature of the said items of information, the connection module (11, 21) creates the said communication network unilaterally in "master-slave" mode in which one entity (10, 20) communicates with the other entities (10, 20) or interactively in "conference" mode, where the entities (10, 20) communicate with each other.

8. A method according to Claim 1, **characterised in that** the said entities (10, 20) are chosen from the group comprising personal digital assistants PDA, tablet PCs, portable telephones, fixed <hot spot> computer terminals that are independent or connected to a computer network, fixed or portable computers that are independent or connected to a computer network.

9. A method according to Claim 1, **characterised in that** auxiliary entities are added, which are not equipped with the connection module, are designed to provide the said entities (10, 20) with data such as geographical location of the entities (10, 20) and industrial parameters originating from measuring devices.

10. A method according to Claim 1, **characterised in that** the said items of information are chosen from the group comprising the items of information in visual form, in audio form, in multimedia form and in encrypted form.

11. A method according to Claim 1, **characterised in that** at least one empathy criterion chosen from the group comprising geographical empathy criteria (G) designed to determine the distance between the said entities (10, 20), qualitative empathy criteria (Q) designed to identify the said entities (10, 20), environmental empathy criteria (E) designed to take into consideration an external event such as a time indication, a signal or a message.

12. A method according to Claim 11, **characterised in that** at least one empathy criterion (G, Q, E) is dynamic and can be modified by the said application software.

13. A method according to Claim 11, **characterised in that** at least two different, cumulative empathy criteria (G, Q, E) are defined.

14. A method according to Claim 11, **characterised in that** several empathy sub-criteria are defined in at least one empathy criterion (G, Q, E).

15. A method according to Claim 13 or 14, **characterised in that** the said empathy criteria or empathy sub-criteria are classified in order of importance.

16. A method according to Claim 1, **characterised in that** an error message is sent to the so-called chosen entities (10, 20) in the event that the communication network is not created when their empathy criteria (G, Q, E) agree.

17. Wireless, selective, spontaneous connection equipment of at least two independent entities (10,20), the said equipment comprising at least the said two entities, the said two entities each comprising at least a communication module using radiofrequency waves that is designed to emit and/or receive items of information in a predetermined and programmable emission zone, so that the entities (10, 20) each comprise at least one software package determining a given application and at least one connection module (11, 21) based on a preliminary recognition of empathy criteria (G, Q, E) predetermined for the said given application, these empathy criteria (G, Q, E) being predetermined for the said given application for each of the entities (10, 20) and the connection module (11, 21) of each of the entities (10, 20) being designed:
■ to explore the geographical zone corresponding substantially to its predetermined emission zone to search for the other entities (10, 20) present in this geographical zone, and
■ to select, from the entities present, the so-called chosen entities (10, 20), the predetermined empathy criteria (G, Q, E) of which agree with its own;
**characterised in that** the said connection module (11, 21) of each of the entities (10, 20) is also designed:
■ to create a specific communication network that is wireless, spontaneous, selective and transient between the so-called chosen entities (10, 20) as long as their empathy criteria (G, Q, E) agree, and
■ to emit and/or diffuse between the so-called chosen entities (10, 20) the said items of information as a function of the said given application.

18. Equipment according to Claim 17, **characterised in that** the said entities (10, 20) are autonomous and are not connected to an existing computer network.

19. Equipment according to Claim 17, **characterised in that** the said entities comprise an interface designed to communicate with an existing computer network such as an Intranet or the Internet.

20. Equipment according to Claim 17, **characterised in that** each entity (10, 20) comprises an audible and/or visual warning device designed to warn it when it is a so-called chosen entity.

21. Equipment according to Claim 17, **characterised in that** all the entities (10, 20) are mobile.

22. Equipment according to Claim 17, **characterised in that** at least one entity (10, 20) is fixed.

23. Equipment according to Claim 17, **characterised in that** the said connection module (11, 12) is designed to create the said communication network unilaterally in "master-slave" mode in which one entity (10, 20) communicates with the other entities (10, 20) or interactively in "conference" mode in which the entities (10, 20) communicate with each other.

24. Equipment according to Claim 17, **characterised in that** the said entities (10, 20) are chosen from the group comprising nomad terminals (30) such as personal digital assistants PDA, tablet PCs, mobile telephones, fixed universal <Hot Spot> posts (50) that are independent or connected to a computer network, servers (40) such as fixed or portable computers that are independent or connected to a computer network.

25. Equipment according to Claim 17,
**characterised in that** it comprises auxiliary, non-equipped entities of the connection module (11, 21) that are chosen from the group comprising the tracking posts (70), the industrial posts (60) capable of collecting industrial data.

26. Equipment according to Claim 17, **characterised in that** the said items of information are in text form, in audio form, in multimedia form or in encrypted form.

27. Equipment according to Claim 17, **characterised in that** the said empathy criteria are chosen from the group comprising geographical empathy criteria (G) designed to determine the distance between the said entities (10, 20), qualitative empathy criteria (Q) designed to identify the said entities (10, 20), environmental empathy criteria (E) designed to take into consideration an external event such as a time indication, a signal or a message.

28. Equipment according to Claim 27, **characterised in that** at least one empathy criterion (G, Q, E) is designed to be dynamic and modifiable by the said application software.

29. Equipment according to Claim 27, **characterised in that** the said empathy criteria (G, Q, E) number at least ten and **in that** they are different and cumulative.

30. Equipment according to Claim 27, **characterised in that** at least one empathy criterion (G, Q, E) comprises several empathy sub-criteria.

31. Equipment according to Claim 29 or 30, **characterised in that** the said empathy criteria or empathy sub-criteria are classified in order of importance.

32. Equipment according to Claim 17, **characterised in that** the said communication module (11, 21) is designed to send an error message to the so-called chosen entities (10, 20) in the event that the communication module is not created when their empathy criteria (G, Q, E) agree.

## Patentansprüche

1. Verfahren zur drahtlosen, selektiven und spontanen Verbindungsherstellung von mindestens zwei unabhängigen Einheiten (10,20), die jeweils mindestens ein Funkfrequenzwellen-Kommunikationsmodul aufweisen, welches angeordnet ist, um Informationen in einer zuvor festgelegten und programmierbaren Sendezone zu senden und/oder zu empfangen, so dass jede Einheit (10,20) mit mindestens einem Softwareprogramm, welches eine gegebene Anwendung bestimmt, und mit mindestens einem Verbindungsherstellungsmodul (11,21) ausgerüstet wird, dass Emphatiekriterien (G,Q,E) für jede der Einheiten (10,20), und in Abhängigkeit von der gegebenen Anwendung festgelegt werden, und dass das Verfahren mindestens die folgenden Schritte umfasst:
◆ einen Abtastschritt, während dem das Verbindungsherstellungsmodul (11,21) jeder Einheit (10,20) eine geographische Zone abtastet, die praktisch ihrer Sendezone entspricht, die zur Suche der anderen, in dieser geographischen Zone vorhandenen Einheiten (10,20) zuvor festgelegt wird, und
◆ einen Auswahlschritt, während dem das Verbindungsherstellungsmodul (11,12) jeder Einheit (10,20) die Emphatiekriterien (G,Q,E) der vorhandenen Einheiten vergleicht und nur die sogenannten ausgewählten Einheiten (10,20) auswählt, deren Emphatiekriterien (G,Q,E) mit seinen übereinstimmen,
**dadurch gekennzeichnet, dass** das Verfahren außerdem Folgendes umfasst
◆ einen Verbindungsherstellungsschritt, während dem das Verbindungsherstellungsmodul (11,12) ein privilegiertes Kommunikationsnetz erzeugt, welches zwischen den sogenannten ausgewählten Einheiten (10,20) drahtlos, spontan, selektiv und flüchtig ist, um ihnen den Austausch der Informationen in Abhängigkeit von der gegebenen Anwendung zu ermöglichen, solange ihre Emphatiekriterien (G,Q,E) übereinstimmen.

2. Verfahren nach Anspruch 1, **dadurch gekennzeichnet, dass** alle Einheiten (10,20) offline, nicht mit einem vorhandenen Computernetz verbunden sind, und dass das Verfahren im sogenannten Ad Hoc-Offline-Betrieb arbeitet.

3. Verfahren nach Anspruch 1, **dadurch gekennzeichnet, dass** mindestens eine Einheit (10,20) mit einem vorhandenen Computernetz wie zum Beispiel einem Intranet oder dem Internet verbunden ist, und dass das Verfahren im Infrastrukturmodus arbeitet.

4. Verfahren nach Anspruch 1, **dadurch gekennzeichnet, dass** das Verbindungsherstellungsmodul (11,21) bei dem Verbindungsherstellungsschritt jede sogenannte ausgewählte Einheit (10,20) durch ein hörbares und/oder sichtbares Signal warnt.

5. Verfahren nach Anspruch 1, **dadurch gekennzeichnet, dass** alle Einheiten (10,20) beweglich sind.

6. Verfahren nach Anspruch 1, **dadurch gekennzeichnet, dass** mindestens eine Einheit (10,20) feststehend ist.

7. Verfahren nach Anspruch 1, **dadurch gekennzeichnet, dass** gemäß den Anwendungen des Verfahrens und der Art der Informationen das Verbindungsherstellungsmodul (11,21) das Kommunikationsnetz einseitig im "Master-Slave"-Modus, in dem eine Einheit (10,20) in Richtung der anderen Einheiten (10,20) kommuniziert, oder auf interaktive Art und Weise im "Konferenz"-Modus erzeugt, in dem die Einheiten (10,20) untereinander kommunizieren.

8. Verfahren nach Anspruch 1, **dadurch gekennzeichnet, dass** die Einheiten (10,20) aus der Gruppe ausgewählt werden, welche die PDAs (Personal Digital Assistants), die Notebooks, die Mobiltelefone, die <Hot Spot>-Terminals, die fest, unabhängig oder mit einem Computernetz verbunden sind, die festen oder tragbaren unabhängigen Computer oder die mit einem Computernetz verbunden sind, umfasst.

9. Verfahren nach Anspruch 1, **dadurch gekennzeichnet, dass** Hilfseinheiten hinzugefügt werden, die nicht mit dem Verbindungsherstellungsmodul ausgerüstet sind und die so angeordnet sind, dass sie den Einheiten (10,20) solche Daten liefern, wie zum Beispiel eine geographische Lokalisierung der Einheiten (10,20) oder von Messgeräten kommende Industrieparameter.

10. Verfahren nach Anspruch 1, **dadurch gekennzeichnet, dass** die Informationen aus der Gruppe ausgewählt werden, welche die Informationen in visueller Form, in hörbarer Form, in Multimediaform und in verschlüsselter Form umfasst.

11. Verfahren nach Anspruch 1, **dadurch gekennzeichnet, dass** mindestens ein Emphatiekriterium festgelegt wird, welches aus der Gruppe ausgewählt wird, welche die geographischen Emphatiekriterien (G), die angeordnet sind, um die Entfernung zwischen den Einheiten (10,20) zu bestimmen, qualitative Emphatiekriterien (Q), die zur Identifikation der Einheiten (10,20) angeordnet sind und Umweltemphatiekriterien (E) umfasst, die angeordnet sind, um ein äußeres Ereignis zu berücksichtigen, wie zum Beispiel eine Zeitangabe, ein Signal, eine Mitteilung.

12. Verfahren nach Anspruch 11, **dadurch gekennzeichnet, dass** mindestens ein Emphatiekriterium (G,Q,E) dynamisch und durch die Anwendungssoftware modifizierbar ist.

13. Verfahren nach Anspruch 11, **dadurch gekennzeichnet, dass** mindestens zwei unterschiedliche und kumulative Emphatiekriterien (G,Q,E) festgelegt werden.

14. Verfahren nach Anspruch 11, **dadurch gekennzeichnet, dass** in mindestens einem Emphatiekriterium (G,Q,E) mehrere Unter-Emphatiekriterien festgelegt werden.

15. Verfahren nach Anspruch 13 oder 14, **dadurch gekennzeichnet, dass** die Emphatiekriterien oder Unter-Emphatiekriterien nach der Wichtigkeitsreihenfolge klassifiziert werden.

16. Verfahren nach Anspruch 1, **dadurch gekennzeichnet, dass** in dem Fall eine Fehlermeldung an die ausgewählten Einheiten (10,20) gesendet wird, in dem das Kommunikationsnetz nicht erzeugt wird, wenn die Emphatiekriterien (G,Q,E) übereinstimmen.

17. Ausrüstung zur drahtlosen, selektiven und spontanen Verbindungsherstellung von mindestens zwei unabhängigen Einheiten (10,20), wobei die Ausrüstung mindestens die zwei Einheiten umfasst, wobei die zwei Einheiten jeweils mindestens ein Funkfrequenzwellen-Kommunikationsmodul aufweisen, welches angeordnet ist, um Informationen in einer zuvor festgelegten und programmierbaren Sendezone zu senden und/oder zu empfangen, so dass die Einheiten (10,20) jeweils mindestens ein Softwareprogramm, welches eine gegebene Anwendung bestimmt, und mindestens ein Verbindungsherstellungsmodul (11,21) aufweisen, welches auf einer vorhergehenden Erkennung von Emphatiekriterien (G,Q,E) basiert, die für die gegebene Anwendung zuvor festgelegt sind, wobei die Emphatiekriterien (G,Q,E) für die gegebene Anwendung für jede der Einheiten (10,20) zuvor festgelegt sind, wobei das Verbindungsherstellungsmodul (11,21) jeder der Einheiten (10,20) angeordnet ist, um :
◆ die geographische Zone abzutasten, die praktisch seiner Sendezone entspricht, die zur Suche der anderen, in dieser geographischen Zone vorhandenen Einheiten (10,20) zuvor festgelegt wird, und
◆ unter den vorhandenen sogenannten ausgewählten Einheiten die Einheiten (10,20) auszuwählen, deren zuvor festgelegte Emphatiekriterien (G,Q,E) mit seinen übereinstimmen;
**dadurch gekennzeichnet, dass** das Verbindungsherstellungsmodul (11,21) jeder der Einheiten (10,20) auch angeordnet ist, um:
◆ ein spezifisches Kommunikationsnetz zu erzeugen, welches zwischen den sogenannten ausgewählten Einheiten (10,20) drahtlos, spontan, selektiv und flüchtig ist, solange ihre Emphatiekriterien (G,Q,E) übereinstimmen, und
◆ die Informationen in Abhängigkeit von der gegebenen Anwendung zwischen den sogenannten ausgewählten Einheiten (10,20) zu senden und/oder zu verbreiten.

18. Ausrüstung nach Anspruch 17, **dadurch gekennzeichnet, dass** die Einheiten (10,20) offline und nicht mit einem vorhandenen Computernetz verbunden sind

19. Ausrüstung nach Anspruch 17, **dadurch gekennzeichnet, dass** die Einheiten eine Schnittstelle zur Kommunikation mit einem vorhandenen Computernetz wie zum Beispiel einem Intranet oder dem Internet aufweisen.

20. Ausrüstung nach Anspruch 17, **dadurch gekennzeichnet, dass** jede Einheit (10,20) eine hörbare und/oder sichtbare Warnvorrichtung aufweist, um sie zu warnen, wenn sie eine ausgewählte Einheit ist.

21. Ausrüstung nach Anspruch 17, **dadurch gekennzeichnet, dass** alle Einheiten (10,20) beweglich sind.

22. Ausrüstung nach Anspruch 17, **dadurch gekennzeichnet, dass** mindestens eine Einheit (10,20) feststehend ist.

23. Ausrüstung nach Anspruch 17, **dadurch gekennzeichnet, dass** das Verbindungsherstellungsmodul (11,21) angeordnet ist, um das Kommunikationsnetz einseitig im "Master-Slave"-Modus, in dem eine Einheit (10,20) in Richtung der anderen Einheiten (10,20) kommuniziert, oder auf interaktive Art und Weise im "Konferenz"-Modus zu erzeugen, in dem die Einheiten (10,20) untereinander kommunizieren.

24. Ausrüstung nach Anspruch 17, **dadurch gekennzeichnet, dass** die Einheiten (10,20) aus der Gruppe ausgewählt sind, welche die Mobilterminals (30) wie zum Beispiel die PDAs (Personal Digital Assistants), die Notebooks, die Mobiltelefone, die Universalterminals (50), die fest, unabhängig oder mit einem <Hot Spot>-Computernetz verbunden sind, Server (40) wie zum Beispiel feste oder tragbare Computer, die entweder unabhängig oder mit einem Computernetz verbunden sind, umfasst.

25. Ausrüstung nach Anspruch 17, **dadurch gekennzeichnet, dass** sie Hilfseinheiten aufweist, die nicht mit dem Verbindungsherstellungsmodul (11,21) ausgerüstet sind und die aus der Gruppe ausgewählt sind, welche die Lokalisationsterminals (70) und die Industrieterminals (60) umfasst, die zur Sammlung von Industriedaten in der Lage sind.

26. Ausrüstung nach Anspruch 17, **dadurch gekennzeichnet, dass** die Informationen in Textform, in hörbarer Form, in Multimediaform oder in verschlüsselter Form vorhanden sind.

27. Ausrüstung nach Anspruch 17, **dadurch gekennzeichnet, dass** die Emphatiekriterien aus der Gruppe ausgewählt sind, welche die geographischen Emphatiekriterien (G), die angeordnet sind, um die Entfernung zwischen den Einheiten (10,20) zu bestimmen, qualitative Emphatiekriterien (Q), die zur Identifikation der Einheiten (10,20) angeordnet sind, und Umweltemphatiekriterien (E) umfasst, die angeordnet sind, um ein äußeres Ereignis zu berücksichtigen, wie zum Beispiel eine Zeitangabe, ein Signal, eine Mitteilung.

28. Ausrüstung nach Anspruch 27, **dadurch gekennzeichnet, dass** mindestens ein Emphatiekriteriun (G,Q,E) so angeordnet ist, dass es dynamisch und durch die Anwendungssoftware modifizierbar ist.

29. Ausrüstung nach Anspruch 27, **dadurch gekennzeichnet, dass** die Emphatiekriterien (G,Q,E) mindestens eine Anzahl von zwei aufweisen, und dass sie unterschiedlich und kumulativ sind.

30. Ausrüstung nach Anspruch 27, **dadurch gekennzeichnet, dass** mindestens ein Emphatiekriterium (G,Q,E) mehrere Unter-Emphatiekriterien aufweist.

31. Ausrüstung nach Anspruch 29 oder 30, **dadurch gekennzeichnet, dass** die Emphatiekriterien oder Unter-Emphatiekriterien nach der Wichtigkeitsreihenfolge klassifiziert werden.

32. Ausrüstung nach Anspruch 17, **dadurch gekennzeichnet, dass** das Verbindungsherstellungsmodul (11,21) angeordnet ist, um eine Fehlermeldung an die ausgewählten Einheiten (10,20) in dem Fall zu senden, in dem das Kommunikationsnetz nicht erzeugt wird, während die Emphatiekriterien (G,Q,E) übereinstimmen.
